# EUROPÄISCHE PATENTSCHRIFT

(11) **EP 3 118 662 B1**
(45) Veröffentlichungstag und Bekanntmachung des Hinweises auf die Patenterteilung: **05.08.2020**
(21) Anmeldenummer: 16179298.1
(22) Anmeldetag: 13.07.2016
(51) Int. Cl.: G02B 6/38

(54) **VORRICHTUNG UND SYSTEM ZUM REINIGEN EINES LICHTWELLENLEITERENDES**
DEVICE AND SYSTEM FOR CLEANING AN END OF AN OPTICAL WAVEGUIDE
DISPOSITIF ET SYTEME DE NETTOYAGE D'UNE EXTREMITE DE GUIDE D'ONDE LUMINEUSE

(30) Priorität: 14.07.2015 CH 10242015
(43) Veröffentlichungstag der Anmeldung: 18.01.2017
(73) Patentinhaber: Diamond SA, 6616 Losone (CH)
(72) Erfinder: Coggi, Victor, 6616 Losone (CH); Caloz, Francois, 6618 Arcegno (CH); Fantini, Dionigi Sergio, 21030 Ghirla (IT)
(74) Vertreter: Hepp Wenger Ryffel AG

(56) Entgegenhaltungen:
- EP-A2- 0 819 960
- EP-B1- 0 868 673
- WO-A1-2014/085462
- US-A1- 2008 034 519
- US-A1- 2011 047 731
- US-A1- 2014 259 477

## Beschreibung

Die vorliegende Erfindung betrifft ein System zum Herstellen einer Lichtwellenleitersteckverbindung sowie eine Vorrichtung zum Reinigen eines Lichtwellenleiterendes gemäss den Oberbegriffen der unabhängigen Ansprüche.

Lichtwellenleiter (LWL) oder Lichtleitkabel (LLK) finden im Medizinalsektor verbreitet Anwendung. Einerseits werden sie zu Beleuchtungs- und Abbildungszwecken bei Endoskopen eingesetzt. Andererseits werden Lichtleitkabel zur Übertragung von Energie, beispielsweise für den flexiblen Transport von Laserstrahlung bei chirurgischen Geräten, verwendet. Allerdings werden Lichtwellenleiter auch in der Diagnostik als Bestandteil faseroptischer Sensoren an Spektrometern und anderen optischen Messgeräten eingesetzt. Nicht zuletzt hat allerdings auch im medizinischen Bereich die Bedeutung der Datenübertragung durch Lichtwellenleiter in jüngerer Zeit signifikant zugenommen.

Besondere Anpassungen sind bei der Verwendung von Lichtwellenleitern in Sterilanwendungen erforderlich. So müssen Lichtwellenleiterkabel und Stecker, die beispielsweise an Endoskopen angebracht sind, derart beschaffen sein, dass sie im Zuge der Vorbereitung eines chirurgischen Instrumentes für einen Eingriff einer Sterilisation unterzogen werden können. Spezielle Anforderungen sind in diesem Zusammenhang an Kabelummantelungen und Stecker gestellt. So müssen derartige Kabel sowohl ausserhalb als auch innerhalb des Patienten leicht handhabbar sein, eine gute Körperverträglichkeit aufweisen, und dennoch dem Einfluss von Reinigungs- und Sterilisationsagenzien, wie beispielsweise Dampf oder Desinfektionsmittel, über viele Zyklen standhalten.

Auch an die verwendeten Stecker sind hohe Ansprüche gestellt. Neben einer möglichst dämpfungsarmen Lichtübertragung wird eine einfache Handhabung, insbesondere in Bezug auf deren Reinigung und die Sterilisation angestrebt. Darüber hinaus ist im Hinblick auf die Hygiene auch die Dichtigkeit des Überganges vom Steckergehäuse zum Kabelmantel von Bedeutung. Die WO 94/26160 beschreibt in diesem Zusammenhang ein mit einem Stecker vorkonfektioniertes elektrooptisches Kabel, welches zur Dampf- und Flüssigsterilisation geeignet ist.

Ein allgemeines Problem bei der Herstellung von Lichtwellenleitersteckverbindungen in nahezu sämtlichen Anwendungsbereichen stellt die Sauberkeit des zu verbindenden Lichtwellenleiterendes dar. Entsprechend ist eine Vielzahl von verschiedenen Reinigungssystemen für Lichtwellenleiterenden erhältlich. So beschreiben die US 2011/0154599 A1, die US 2011/0047731 A1 und die US 2008/0034519 A1 Reinigungsgeräte für optische Steckverbinder, welche jeweils einen Führungsabschnitt zur exakten Ausrichtung eines Steckerstiftes mit einem Lichtwellenleiterende umfassen. Die EP 0 868 673 B1 zeigt darüber ein Reinigungsgerät für ein optisches Steckersystem, welches ohne Ferrule auskommt. Die EP 0 819 960 A2 offenbart ein Steckersystem, bei dem ein Basisstecker in verschiedene Steckergehäuse einsetzbar ist.

Lichtwellenleitersteckverbinder sind spezielle Steckverbinder zur lösbaren Verbindung von Lichtwellenleitern. Lichtwellenleiter können über solche Steckverbinder miteinander oder mit weiteren optischen Komponenten verbunden werden. In der Nachrichtentechnik sind dies üblicherweise Sender, Empfänger oder Verstärker. In der Messtechnik, Spektroskopie oder Medizintechnik handelt es sich dabei meist um Lasergeräte, Lichtsensoren oder Strahlungsdetektoren. Die verwendeten Stecker müssen dabei eine möglichst geringe Signaldämpfung und eine hohe Rückflussdämpfung, sowie eine gute Reproduzierbarkeit beziehungsweise Aufrechterhaltung dieser Parameter über viele Verbindungszyklen aufweisen. In den verschiedenen Anwendungsgebieten hat sich im Laufe der Zeit eine Reihe von verschiedenen Steckerstandarts etabliert. So beschreibt beispielsweise die WO 2008/095798 A1 Steckerteile für eine optische Steckverbindung, bei denen eine an einem Kabel vorkonfektionierte Stifthalterung mit einem Steckerstift von der Rückseite her in ein Steckergehäuse eingesetzt werden kann.

Ein Nachteil bei bekannten Systemen besteht darin, dass Lichtwellenleitersteckverbinder, insbesondre solche zur Datenübertragung, in der Regel nicht für Sterilanwendungen geeignet sind. So sind die üblichen Stecksysteme nicht dazu vorgesehen, aggressiven Reinigungs- und Sterilisationsbedingungen ausgesetzt zu werden. Die Steckerteile sind darüber hinaus nicht für eine Handhabung im klinischen Umfeld ausgelegt. Ihre Reinigung und Sterilisation ist daher aufgrund ihrer Geometrie oft schwierig. Ferner führt die Sterilisation von mit Steckverbindern vorkonfektionierten Lichtwellenleiterkabel zu Rückständen auf den Lichtwellenleiterenden, die eine nicht tolerierbare Signaldämpfung verursachen.

Es ist daher die Aufgabe der Erfindung, die Nachteile im Stand der Technik zu überwinden. Insbesondere ist es die Aufgabe der Erfindung, ein System und ein Verfahren zum Herstellen einer Lichtwellenleitersteckverbindung zu schaffen, die speziell für Sterilanwendungen ausgelegt sind. Dabei soll es unter anderem auch dem medizinischen Personal ermöglicht werden, schnell und zuverlässig eine derartige Verbindung herzustellen, wobei sowohl die Qualität der Signalübertragung als auch die Anforderungen an die Patientensicherheit gewährleistet sein müssen.

Diese Aufgaben werden durch eine Vorrichtung zum Reinigen eines Lichtwellenleiterendes gemäss Anspruch 1 gelöst.

Die Erfindung betrifft eine Vorrichtung zum Reinigen eines Lichtwellenleiterendes mit einem Führungsabschnitt für die lagestabile Aufnahme des Lichtwellenleiterendes und einer drehbar gelagerten Spule, auf welche ein flexibles Reinigungselement aufwickelbar ist. Der Führungsabschnitt und die Spule sind relativ zueinander derart positioniert, dass ein durch den Führungsabschnitt aufgenommenes Lichtwellenleiterende gegen das aufgewickelte Reinigungselement pressbar ist. Das Reinigungselement ist derart von der Spule abwickelbar, dass das Lichtwellenleiterende im Verlaufe der Abwicklung mit unterschiedlichen Abschnitten des Reinigungselementes beaufschlagbar ist.

Mit der beschriebenen Anordnung wird eine besonders einfache und kostengünstige Vorrichtung zum Reinigen eines Lichtwellenleiterendes bereitgestellt, die durch den Benutzer leicht zu bedienen ist. Die Vorrichtung gewährleistet dennoch eine zuverlässige und in jedem Fall gründliche Reinigung. Aufgrund ihres einfachen Aufbaus kann die Vorrichtung als Einwegartikel vorgesehen sein. Sie wird damit nach einmaligem Gebrauch, sprich nach einmaligem Abwickeln des aufgewickelten Reinigungselementes, entsorgt. Allerdings wäre es auch denkbar, die Vorrichtung einer, insbesondere externen, Wiederaufbereitung zuzuführen.

Bei der beschriebenen Vorrichtung kann der Führungsabschnitt zur Aufnahme eines Steckerstiftes, einer Stifthalterung oder eines Steckergehäuses ausgebildet sein. Bei dieser Ausführung ist das Lichtwellenleiterende vorzugsweise im Führungsabschnitt indirekt einrastbar. Mit einem solchen Führungsabschnitt ist die Vorrichtung kompatibel mit vorkonfektionierten Lichtwellenleiterkabeln, bei denen zumindest ein Lichtwellenleiterende in einem Steckerstift ruht, welcher üblicherweise wiederum von einer Stifthalterung gehalten ist. Ist das Lichtwellenleiterende zusätzlich über den Steckerstift oder die Stifthalterung am Führungsabschnitt indirekt einrastbar, wird eine besonders zuverlässige Anpressung des Lichtwellenleiterendes an das Reinigungselement gewährleistet.

Ein durch den Führungsabschnitt aufgenommenes Lichtwellenleiterende kann senkrecht zur Spulenlängsachse an das auf die Spule aufgewickelte Reinigungselement anpressbar sein. Durch diese Anordnung wird üblicherweise ein optimales Reinigungsresultat erzielt.

Der Führungsabschnitt kann eine Schutzklappe aufweisen. Eine derartige Schutzklappe kann dazu dienen, das Eindringen von Staub in die Vorrichtung, insbesondere vor deren Verwendung, zu verhindern. Die Schutzklappe kann bei Einführen eines Steckerstiftes, einer Stifthalterung oder eines Steckergehäuses in den Führungsabschnitt diesen selbständig freigeben, insbesondere durch eine Klappbewegung.

Die Spulenachse kann, insbesondere in Anpressrichtung des Lichtwellenleiterendes, durch Federelemente federnd gelagert sein. Durch eine gefederte Lagerung der Spulenachse kann die beschriebene Vorrichtung derart ausgeführt sein, dass der Anpressdruck des Lichtwellenleiterendes auf das Reinigungselement unabhängig ist von der vom Benutzer auf das Reinigungselement ausgeübten Muskelkraft. Dadurch werden einerseits Beschädigungen des Lichtwellenleiterendes vermieden. Andererseits wird ein gutes Reinigungsresultat gewährleistet. Die Federelemente können durch insbesondere zapfenförmige Federzentrierungen lagestabil gehalten sein.

Das Reinigungselement kann eine Schnur oder ein Tuch, insbesondere bestehend aus Mikrofasern, sein. Durch die wahlweise Verwendung einer Schnur oder eines Tuches lässt sich die Art des Reinigungselementes das jeweilige Lichtleiterende abstimmen. Sowohl Schnüre als auch Tücher lassen sich sehr einfach, gegebenenfalls maschinell, auf die Spule aufwickeln.

Im vorliegenden Zusammenhang bezieht sich der Begriff Mikrofaser auf eine Faser, deren Feinheit geringer als 1.0 detex ist; das heisst, dass 10'000 m einer solchen Mikrofaser ein maximales Gewicht von 1 g hat. Vorzugsweise liegt die Feinheit einer hier verwendeten Mikrofaser in einem Bereich zwischen 0.3 und 0.8 detex, bevorzugterweise zwischen 0.4 und 0.6 detex. Es versteht sich von selbst, dass eine in diesem Zusammenhang verwendete Mikrofaserschnur üblicherweise nicht aus einer einzigen Faser besteht, sondern eine Schnur ist, die aus Mikrofasern gefertigt ist. Mikrofasergewebe und Mikrofaserschnüre sind aussergewöhnlich weich und formbeständig. Mikrofasern können aus synthetischen oder natürlichen Werkstoffen gefertigt sein. Im Zusammenhang mit der vorliegenden Erfindung können Mikrofasern aus Polyester, Nylon, Polyacryl oder Cellulose eingesetzt werden.

Da Mikrofasern derart fein sind, können viele von ihnen eng zusammengepackt werden. Entsprechend werden viel mehr feine Fasern benötigt, um einen Faden oder eine Schnur herzustellen, woraus sich eine grössere Oberfläche ergibt. Mikrofasertextilien sind sehr resistent gegen Fusseln. Dies ist im vorliegenden Zusammenhang von besonderer Bedeutung, da eine rückstandsfreie Reinigung des Lichtwellenleiterendes gewährleistet sein muss. Mikrofasern sind hierzu besonders gut geeignet, da bei ihrem Einsatz gar kein oder nur geringe Mengen eines Reinigungsmittels benötigt werden. Ein Reinigungsartikel aus Mikrofasern kann aus einem Multifilamentgarn aufgebaut sein.

Die beschriebene Reinigungsvorrichtung kommt in der Regel ohne den Einsatz von Reinigungsmitteln aus. Allerdings kann das Reinigungselement auch in Reinigungsmittel getränkt oder oberflächlich damit behandelt sein. Hierzu kommen beispielsweise Mischungen von Wasser mit Alkoholen und/oder Ammoniak in Frage. Bei den Alkoholen kann es sich um Methanol, Ethanol, n-Propanol, *iso*Propanol, n-Butanol, sec-Butanol oder tert-Butanol handeln. Allerdings können auch Reinigungsmittel auf nicht wässeriger Basis, wie beispielsweise Reinigungsbenzin, verwendet werden. Das Behandeln des Reinigungselementes im Reinigungsmittel kann dabei vor oder nach dem Aufwickeln auf die Spule erfolgen.

Beschrieben ist ferner ein Verfahren zum Reinigen eines Lichtwellenleiterendes, insbesondere mit einer oben beschriebenen Vorrichtung, umfassend die Schritte:
- Einführen eines Lichtwellenleiterendes in einen Führungsabschnitt,
- Anpressen des Lichtwellenleiterendes an ein auf einer Spule aufgewickeltes Reinigungselement,
- Abwickeln des Reinigungselementes von der Spule, insbesondere durch Ausüben einer Zugkraft, derart, dass das Lichtwellenleiterende im Verlaufe der Abwicklung mit unterschiedlichen Abschnitten des Reinigungselementes beaufschlagt wird,
- Entfernen des Lichtwellenleiterendes aus dem Führungsabschnitt.

Das beschriebene Verfahren stellt eine besonders einfache und zuverlässige Methode zum Reinigen eines Lichtwellenleiterendes dar. Insbesondere durch das Ausüben einer Zugkraft auf das Reinigungselement kann ein Anwender mit Leichtigkeit ein Abwickeln desselben von der Spule erzielen, womit auf effiziente Weise die Reinigung eines Lichtwellenleiterendes bezweckt werden kann.

Beschrieben ist darüber hinaus ein Verfahren zum Herstellen einer Lichtwellenleitersteckverbindung umfassend die Schritte:
- Sterilisieren eines an einem Lichtwellenleiterkabel angebrachten, vorzugsweise von einem Steckstift gehaltenen, Lichtwellenleiterendes,
- Einsetzen des Lichtwellenleiterendes in ein Steckergehäuse, um einen Lichtwellenleiterstecker zu erhalten, wobei die Verankerung des Lichtwellenleiterendes im Steckergehäuse vorzugsweise über die Stifthalterung für den Steckerstift erfolgt,
- Reinigen des Lichtwellenleiterendes, insbesondere nach einem oben beschriebenen Verfahren,
- Einstecken des Lichtwellenleitersteckers in ein kompatibles Buchsenteil.

Das beschriebene Verfahren findet insbesondere im Medizinalbereich Anwendung. So kann ein mit einem Lichtwellenleiterkabel versehenes Instrument, beispielsweise ein Endoskop, einem regulären Reinigungs- und Sterilisationsprozess unterzogen werden. Hierzu können klassische maschinelle Reinigungsverfahren sowie die Behandlung in einem Autoklaven angewendet werden. Da das Lichtwellenleiterende im Zuge dessen nicht von einem vollständigen Lichtwellenleiterstecker umgeben ist, ergeben sich insbesondere bei der Sterilisation weniger Probleme mit schwer zugänglichen Stellen an einem Steckergehäuse oder mit der Kompatibilität der verwendeten Materialien mit den Sterilisationsagentien. Eine in diesem Zusammenhang vorzugsweise verwendete Stifthalterung für einen Steckerstift weist zudem in der Regel eine im Vergleich zum Steckergehäuse einfache Geometrie auf.

Auch die Vorrichtung zum Reinigen des Lichtwellenleiterendes und das Steckergehäuse können vor deren Verwendung einem Sterilisationsprozess unterzogen werden. Hierzu eignet sich beispielsweise die Behandlung mit Ethylenoxid, welche insbesondere im Hinblick auf die geometrische Komplexität dieser Teile gut geeignet ist.

Die Endmontage des Steckers erfolgt erst nach der Reinigung und Sterilisation. Die Reinigung des Lichtwellenleiterendes kann vor oder nach diesem Endmontageprozess erfolgen.

Beschrieben ist darüber hinaus einen Lichtwellenleiterstecker für eine Lichtwellenleitersteckverbindung, mit einem Steckerstift, wobei der Steckerstift über eine Stifthalterung in ein Steckergehäuse einsetzbar ist. Die Stifthalterung besteht aus einem korrosionsbeständigen Metall, insbesondere aus einem Edelstahl, und weist Arretiermittel zum Arretieren am Steckergehäuse auf. Durch die Aufteilung des Lichtwellenleitersteckers in Steckerstift mit Stifthalterung einerseits und Steckergehäuse andererseits wird die Reinigung und Sterilisation des Lichtwellenleiterendes deutlich vereinfacht. Die Stifthalterung, und vorzugsweise auch der Steckerstift, bestehen aus hochwertigen, korrosionsbeständigen Materialien, welche einer Reinigung und Sterilisation unterzogen werden können. Das Steckergehäuse hingegen ist aus günstigen Materialien aufgebaut und in der Regel zum einmaligen Gebrauch vorgesehen. Ein derart ausgeführter Lichtwellenleiterstecker ermöglicht eine besonders kostengünstige und einfache Anwendung im Medizinalbereich.

Die Arretiermittel an der oben beschriebenen Stifthalterung können Teil eines Bajonettverschlusses sein. Ein derartiger Bajonettverschluss ermöglicht eine besonders schnelle und zuverlässige Befestigung der Stifthalterung im Steckergehäuse. Um den Reinigungs- und Sterilisationsprozess für die Stifthalterung möglichst zu vereinfachen, sind die daran angebrachten Teile des Bajonettverschlusses in der Regel vergleichsweise einfach ausgeführt. Über den Bajonettverschluss kann auch eine federnde Lagerung des Steckerstiftes erzielt werden, wobei der Federmechanismus bevorzugt im Steckergehäuse untergebracht ist. Alternativ zum Bajonettverschluss kann auch ein Schnappverschluss zur Anwendung kommen.

Die vorliegende Erfindung betrifft des Weiteren ein System zum Herstellen einer Lichtwellenleitersteckverbindung, insbesondere nach einem oben beschriebenen Verfahren, umfassend:
- Eine Vorrichtung zum Reinigen eines Lichtwellenleiterendes wie oben beschrieben,
- einen Lichtwellenleiterstecker, insbesondere wie oben beschrieben.

Ein derartiges System bietet in Verbindung mit einem Lichtwellenleiterkabel mit einem Lichtwellenleiterende, welches mit einem Steckerstift und einer Stifthalterung vorkonfektioniert ist, eine überaus zuverlässige Möglichkeit, eine Lichtwellenleitersteckverbindung im Sterilbereich herzustellen.

Das besagte System kann in einer Sichtverpackung, insbesondere in einem sog. Blister verpackt sein. Der Blister umfasst dabei ein Kunststofffolienformteil in welches das erfindungsgemässe System oder Teile davon eingesetzt sind. Das Kunststofffolienformteil ist an einer Rückwand fixiert. Diese Rückwand kann aus Papier, Pappe, Karton, Kunststoff oder Metallfolie, insbesondere aus einer Aluminiumfolie, oder Kombinationen davon bestehen. Das Kunststofffolienformteil kann durch eine Schweiss-, Klemm- oder Heftverbindung mit der Rückwand verbunden sein. Für die vorliegende Anwendung ist insbesondere eine Schweissverbindung von Vorteil, da sie ein steriles Verpacken des Systems erlaubt. Auch separate Verpackungen für das Steckergehäuse und die Reinigungsvorrichtung z.B. in hermetisch verschweissten Beuteln sind denkbar.

Weitere Vorteile und Einzelmerkmale der Erfindung ergeben sich aus der nachfolgenden Beschreibung eines Ausführungsbeispiels und aus den Zeichnungen.

Es zeigen schematisch:
- Figur 1:: Ein Teilschnitt durch eine erfindungsgemässe Vorrichtung zum Reinigen eines Lichtwellenleiterendes;
- Figur 2:: Ein Teilschnitt durch ein alternatives Ausführungsbeispiel einer erfindungsgemässen Vorrichtung zum Reinigen eines Lichtwellenleiterendes;
- Figur 3:: Eine Übersichtsdarstellung eines erfindungsgemässen Systems zum Herstellen einer Lichtwellenleitersteckverbindung;
- Figur 4:: Zusammengebauter Lichtwellenleiterstecker gemäss Figur 2, welcher in eine Vorrichtung zum Reinigen eines Lichtwellenleiterendes gemäss Figur 1 eingesetzt ist;
- Figur 5:: Vergrösserte Darstellung eines Endes eines Lichtwellenleiterkabels, welches mit einem Steckerstift mit Stifthalterung vorkonfektioniert ist;
- Figur 6:: Perspektivische Schnittansicht einer erfindungsgemässen Vorrichtung zum Reinigen eines Lichtwellenleiterendes gemäss Figur 2.

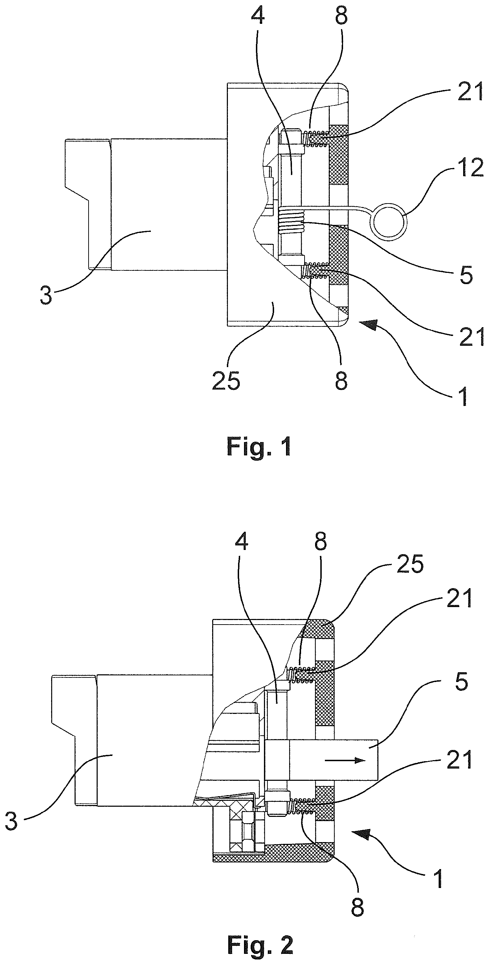

Wie aus Figur 1 hervorgeht, umfasst eine erfindungsgemässe Vorrichtung 1 zum Reinigen eines Lichtwellenleiterendes 2 ein Gehäuse 25 sowie einen daran anschliessenden Führungsabschnitt 3 zur Aufnahme des Lichtwellenleiterendes 2. Darüber hinaus umfasst die Vorrichtung eine Spule 4, auf welche ein Reinigungselement 5 aufgewickelt ist. Im gezeigten Ausführungsbeispiel ist die Spule 4 über die Federelemente 8 federnd gelagert. Die Federelemente 8 werden jeweils durch eine Federzentrierung 21 lagestabil gehalten. Das Abwickeln des Reinigungselementes 5 von der Spule 4 kann durch Ausüben einer Zugkraft auf das Reinigungselement 5 mit der dafür vorgesehenen Griffschlaufe 12 erfolgen.

Figur 2 zeigt ein alternatives Ausführungsbeispiel einer erfindungsgemässen Vorrichtung zum Reinigen eines Lichtwellenleiterendes, bei welcher das Reinigungselement 5 als Tuch ausgeführt ist.

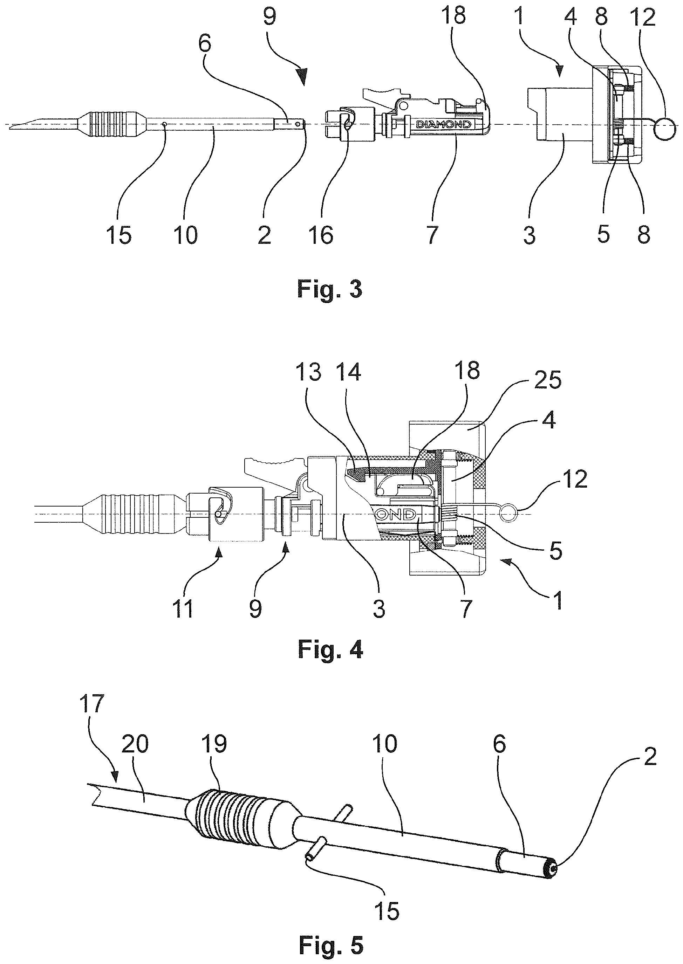

In Figur 3 ist der Aufbau eines erfindungsgemässen Lichtwellenleitersteckers 9 deutlicher ersichtlich. Das Lichtwellenleiterende 2 ist mit einem Steckerstift 6 und einer Stifthalterung 10 vorkonfektioniert. Diese können in ein Steckergehäuse 7 eingesetzt werden. Bei dem dargestellten Steckergehäuse 7 handelt es sich um eine vom bekannten E-2000®-System abgewandelte Version. Es ist zu erkennen, dass das vom Steckerstift 6 gehaltente Lichtwellenleiterende 2 vor dem Einsetzen in den Führungsabschnitt 3 mit einem Schutzdeckel 18 abgedeckt ist. Sowohl die Stifthalterung 10 als auch das Steckergehäuse 7 weisen Arretiermittel 15, 16 auf, die Teil eines Bajonettverschlusses 11 sind. Im vorliegenden Ausführungsbeispiel ist das Steckergehäuse 7 derart ausgeführt, dass es durch den Führungsabschnitt 3 einer Vorrichtung 1 zum Reinigen eines Lichtwellenleiterendes 2 aufnehmbar ist.

In Figur 4 ist der zusammengebaute Lichtwellenleiterstecker 9 gemäss Figur 2 in eine Vorrichtung 1 zum Reinigen des Lichtwellenleiterendes 2 eingesetzt. Sowohl die Vorrichtung 1 als auch der Stecker 9 verfügen über Rastelemente 13 und 14, um ein Einrasten des Steckergehäuses 7 im Führungsabschnitt 3 zu ermöglichen. Es ist zu erkennen, dass durch das Einsetzen es Steckergehäuses 7 in den Führungsabschnitt 3 der Schutzdeckel 18 vom Lichtwellenleiterende 2 entfernt wird. Beim E-2000®-System erfolgt dies selbstständig. Das Lichtwellenleiterende 2 ragt dann leicht aus dem Steckergehäuse 7, wodurch eine Reinigung mit dem auf die Spule 4 aufgewickelten Reinigungselement 5 ermöglicht wird.

Aus Figur 5 gehen Einzelheiten zu einem mit einem Steckerstift 6 mit Stifthalterung 10 vorkonfektionierten Lichtwellenleiterkabel 17 hervor. Im gezeigten Ausführungsbeispiel weist die Stifthalterung 10 im Übergangsbereich zum Kabelmantel 20 einen Grifffläche 19 auf. Dieser sorgt auch für eine dichte Verbindung zwischen Stifthalterung 10 und Kabelmantel 20. Als Arretiermittel 15 dienen sich diametral gegenüberliegende Laschen oder Bolzen an der Stifthalterung 10, vorzugsweise einstückig mit dieser ausgebildet.

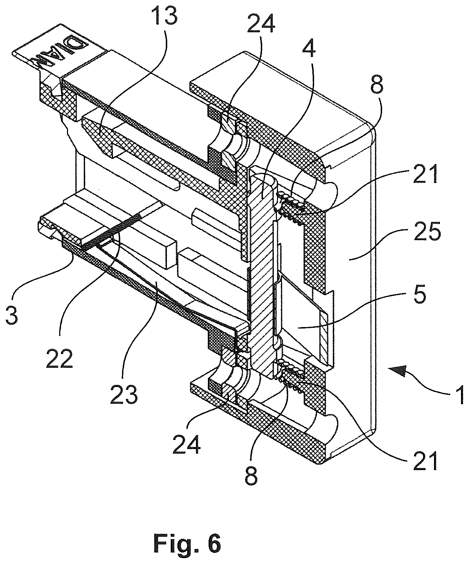

Der Figur 6 sind weitere Einzelheiten einer erfindungsgemässen Vorrichtung gemäss Figur 2 zu entnehmen. Es ist zu erkennen, dass der Führungsabschnitt 3 eine Schutzklappe 22 aufweist, welche über eine Blattfeder 23 vorgespannt ist. Die Schutzklappe 22 dient dazu, das Eindringen von Staub in die Vorrichtung 1 vor deren Verwendung zu verhindern. Bei Einführen eines Steckers 9 in den Führungsabschnitt 3 klappt die Schutzklappe 22 selbständig zurück, um den Führungsabschnitt 3 freizugeben. In den Führungsabschnitt 3 sind Schraubenmuttern 24 eingepresst, mit welchen dieser mit dem Gehäuse 25 sowie mit dem Rastelemente 13 verschraubt werden kann. Durch diese Verschraubung (Schrauben in Figur 6 nicht gezeigt) wird auch die Blattfeder 23 gehalten.

## Patentansprüche

1. Vorrichtung (1) zum Reinigen eines Lichtwellenleiterendes (2) mit einem Führungsabschnitt (3) für die lagestabile Aufnahme des Lichtwellenleiterendes (2) und einer drehbar gelagerten Spule (4), auf welche ein flexibles Reinigungselement (5) aufgewickelt ist, **dadurch gekennzeichnet, dass** der Führungsabschnitt (3) und die Spule (4) relativ zueinander derart positioniert sind, dass ein durch den Führungsabschnitt (3) aufgenommenes Lichtwellenleiterende (2) gegen das aufgewickelte Reinigungselement (5) pressbar ist und das Reinigungselement (5) derart von der Spule (4) abwickelbar ist, dass das Lichtwellenleiterende (2) im Verlaufe der Abwicklung mit unterschiedlichen Abschnitten des Reinigungselementes (5) beaufschlagbar ist.

2. Vorrichtung (1) nach Anspruch 1, **dadurch gekennzeichnet, dass** der Führungsabschnitt (3) zur Aufnahme eines Steckerstiftes (6), einer Stifthalterung (10) oder eines Steckergehäuses (7) ausgebildet ist.

3. Vorrichtung (1) nach Anspruch 2, **dadurch gekennzeichnet, dass** der Führungsabschnitt (3) derart ausgestattet ist, dass das Lichtwellenleiterende (2) indirekt einrastbar ist.

4. Vorrichtung (1) nach einem der Ansprüche 1 bis 3, **dadurch gekennzeichnet, dass** der Führungsabschnitt (3) derart ausgestattet ist, dass das aufgenommene Lichtwellenleiterende (2) senkrecht zur Spulenlängsachse an das auf die Spule (5) aufgewickelte Reinigungselement (5) anpressbar ist.

5. Vorrichtung nach einem der Ansprüche 1 bis 4, **dadurch gekennzeichnet, dass** die Spulenachse durch Federelemente (8) federnd gelagert ist.

6. Vorrichtung nach Anspruch 5, **dadurch gekennzeichnet, dass** die Spulenachse in Anpressrichtung des Lichtwellenleiterendes (2) federnd gelagert ist.

7. Vorrichtung nach einem der Ansprüche 1 bis 6, **dadurch gekennzeichnet, dass** das Reinigungselement (5) eine Schnur oder ein Tuch ist.

8. Vorrichtung nach Anspruch 7, **dadurch gekennzeichnet, dass** das Reinigungselement (5) aus Mikrofasern besteht.

9. System umfassend
- eine Vorrichtung (1) zum Reinigen eines Lichtwellenleiterendes (2) nach einem der Ansprüche 1 bis 8, und
- einen Lichtwellenleiterstecker (9).

10. System nach Anspruch 9, **dadurch gekennzeichnet, dass** das System in einer Sichtverpackung verpackt ist.

11. System nach Anspruch 10, **dadurch gekennzeichnet, dass** das System in einem Blister umfassend ein Kunststofffolienformteil sowie eine Rückwand, an die das Kunststofffolienformteil fixiert ist, verpackt ist.

12. System nach Anspruch 11, **dadurch gekennzeichnet, dass** die Rückwand aus Papier, Pappe, Karton, Kunststoff oder Metallfolie oder Kombinationen davon besteht.

## Claims

1. A device (1) for cleaning an optical waveguide end (2), having a guide portion (3) for receiving the optical waveguide end (2) in a stable position and a rotatably mounted spool (4) onto which a flexible cleaning element (5) is wound, **characterized in that** the guide portion (3) and the spool (4) are positioned relative to one another such that an optical waveguide end (2) received by the guide portion (3) is able to be pressed against the wound cleaning element (5) and the cleaning element (5) is able to be unwound from the spool (4) such that different portions of the cleaning element (5) are able to be applied to the optical waveguide end (2) during unwinding.

2. The device (1) as claimed in claim 1, **characterized in that** the guide portion (3) is configured to receive a plug pin (6), a pin holder (10) or plug housing (7), and the optical waveguide end (2).

3. The device (1) as claimed in claim 1, **characterized in that** the guide portion (3) is configured such that the optical waveguide end (2) is latchable indirectly.

4. The device (1) as claimed in one of claims 1 to 3, **characterized in that** the guide portion (3) is configured such that the received optical waveguide end (2) is pressable, perpendicularly to the spool longitudinal axis, against the cleaning element (5) wound onto the spool (4).

5. The device as claimed in one of claims 1 to 5, **characterized in that** the spool axle is spring-mounted by spring elements (8).

6. The device as claimed in claim 5, **characterized in that** the spool axle is spring-mounted in the pressing direction of the optical waveguide end (2).

7. The device as claimed in one of claims 1 to 6, **characterized in that** the cleaning element (5) is a string or a cloth

8. The device as claimed in claim 7, **characterized in that** the cleaning element (5) consists of microfibers.

9. A system comprising
- a device (1) for cleaning an optical waveguide end (2) as claimed in one of claims 1 to 8, and
- an optical waveguide plug (9).

10. The system as claimed in claim 9, **characterized in that** the system is packaged in a display pack.

11. The system as claimed in claim 10, **characterized in that** the system is packaged in a blister pack comprising a plastic film molding and a backing, wherein the plastic film molding is fixed to a backing.

12. The system as claimed in claim 11, **characterized in that** the backing consists of paper, board, cardboard, plastic or metal foil, or combinations thereof.

## Revendications

1. Dispositif (1) pour le nettoyage d'une extrémité de conducteur d'onde lumineuse (2) comprenant une section de guidage (3) pour la réception en position stable de l'extrémité de conducteur d'onde lumineuse (2) et une bobine montée rotative (4), sur laquelle un élément de nettoyage flexible (5) est enroulé, **caractérisé en ce que** la section de guidage (3) et la bobine (4) sont positionnées l'une par rapport à l'autre de telle sorte qu'une extrémité de conducteur d'onde lumineuse (2) reçue par la section de guidage (3) puisse être pressée contre l'élément de nettoyage enroulé (5), et l'élément de nettoyage (5) peut être déroulé de la bobine (4) de telle sorte que l'extrémité de conducteur d'onde lumineuse (2) puisse être sollicitée au cours du déroulement avec différentes sections de l'élément de nettoyage (5).

2. Dispositif (1) selon la revendication 1, **caractérisé en ce que** la section de guidage (3) est configurée pour la réception d'une broche de connecteur (6), d'un support de broche (10) ou d'un boîtier de connecteur (7).

3. Dispositif (1) selon la revendication 2, **caractérisé en ce que** la section de guidage (3) est équipée de telle sorte que l'extrémité de conducteur d'onde lumineuse (2) puisse être encliquetée indirectement.

4. Dispositif (1) selon l'une quelconque des revendications 1 à 3, **caractérisé en ce que** la section de guidage (3) est équipée de telle sorte que l'extrémité de conducteur d'onde lumineuse reçue (2) puisse être pressée perpendiculairement à l'axe longitudinal de la bobine sur l'élément de nettoyage (5) enroulé sur la bobine (5).

5. Dispositif selon l'une quelconque des revendications 1 à 4, **caractérisé en ce que** l'axe de la bobine est monté en suspension par des éléments de suspension (8).

6. Dispositif selon la revendication 5, **caractérisé en ce que** l'axe de la bobine est monté en suspension dans la direction de pressage de l'extrémité de conducteur d'onde lumineuse (2).

7. Dispositif selon l'une quelconque des revendications 1 à 6, **caractérisé en ce que** l'élément de nettoyage (5) est un cordon ou un chiffon.

8. Dispositif selon la revendication 7, **caractérisé en ce que** l'élément de nettoyage (5) est constitué de microfibres.

9. Système comprenant :
- un dispositif (1) pour le nettoyage d'une extrémité de conducteur d'onde lumineuse (2) selon l'une quelconque des revendications 1 à 8, et
- un connecteur de conducteur d'onde lumineuse (9).

10. Système selon la revendication 9, **caractérisé en ce que** le système est emballé dans un emballage de présentation.

11. Système selon la revendication 10, **caractérisé en ce que** le système est emballé dans un emballage coque comprenant une pièce moulée en film plastique, ainsi qu'une paroi arrière, à laquelle la pièce moulée en film plastique est fixée.

12. Système selon la revendication 11, **caractérisé en ce que** la paroi arrière est constituée de papier, papier cartonné, carton, plastique ou film métallique ou de combinaisons de ceux-ci.
